# EUROPEAN PATENT SPECIFICATION

(11) **EP 3 694 640 B1**
(45) Date of publication and mention of the grant of the patent: **04.05.2022**
(21) Application number: 18773190.6
(22) Date of filing: 25.09.2018
(51) Int. Cl.: B01J 13/04, B01J 13/00, C04B 20/10

(54) **CORE-SHELL EXPANDING AGENTS AND THEIR USE IN CEMENTITIOUS SYSTEMS**
BESCHICHTETE ANORGANISCHE TREIBMITTELPARTIKEL UND DEREN VERWENDUNG IN ZEMENTARTIGEN SYSTEMEN
PARTICULES D'AGENT D'EXPANSION INORGANIQUE ENROBÉES ET LEUR UTILISATION DANS DES SYSTÈMES CIMENTAIRES

(30) Priority: 13.10.2017 EP 17196347
(43) Date of publication of application: 19.08.2020
(73) Proprietor: BASF SE, 67056 Ludwigshafen am Rhein (DE)
(72) Inventor: CHOI, Sung Yeun, 67056 Ludwigshafen (DE); BERGNER, Kai, 67056 Ludwigshafen (DE); KIERAT, Radoslaw, 67056 Ludwigshafen (DE); MUELLER, Michael Klemens, 67056 Ludwigshafen (DE)
(74) Representative: BASF IP Association
(86) International application number: PCT/EP2018/075858
(87) International publication number: WO 2019/076585

(56) References cited:
- EP-A1- 2 169 027
- WO-A1-2008/118827
- WO-A1-2017/174208
- GB-A- 2 511 140
- DATABASE WPI Week 201036 12 May 2010 (2010-05-12) Thomson Scientific, London, GB; AN 2010-F54673 XP002780116, -& CN 101 705 741 A (XINYANG TIANYI ENERGY SAVING TECHNOLOGY) 12 May 2010 (2010-05-12)

## Description

The invention relates to coated inorganic expanding agent particles, a process for preparing the coated particles, and their use in cementitious systems.

Cementitious systems harden with a slight loss in volume (shrinkage). As a consequence thereof, crack formation may occur which impairs the strength of the concrete. In the oil and gas industry bonding between set cement and casing or formation is reduced so that a small gap or microannulus may form at the cement/casing and/or cement/formation interface, in particular under the thermal and mechanical stress that occurs in connection with oil and gas drilling operations. Under these circumstances an effective zonal isolation cannot be achieved.

To avoid the shrinkage expansive cements have been used which are hydraulic cements that, after setting, increase in volume. The increase in volume is often achieved by adding expanding agents such as fibers, magnesium oxide or calcium oxide. However, the use of such expanding agents is problematic since the expanding agents known in the art begin to hydrate and thus begin to expand as soon as they contact water. Therefore, the expanding agent can in many cases not be added to the cement slurry because the expanding agent is going to expand too early, i.e. before the cement slurry is positioned at the desired location leading to significant disadvantages.

Various efforts to delay expansion have been suggested. Coating of metal oxide particles with non-hydratable or previously hydrated minerals such as metal carbonates, hydroxides and hydrates was suggested in US 4,332,619, US 5,741,357, EP 2 169 027 A1; but these materials can be difficult to prepare and have had only limited success. Also the coating of core particles with water glass has been known, resulting in silica-coated particles.

FR 710 302 discloses a hardening accelerator for cement which is obtained by coating sand, gravel or a pozzolan with water glass and converting the water glass to a hydrated silicic acid gel.

US 5,118,527 discloses a method of coating aluminum flakes which are used as an expanding agent with a film, e.g., sodium silicate, which is sensitive to the water and/or alkaline nature of wet grout.

WO 2013/023949 which describes a powder having a calcium oxide core and a shell formed of amorphous silicon dioxide. The powder is produced by injecting a hydrolysable or oxidizable calcium compound, a hydrogen-containing fuel gas and an oxygen-containing gas in a combustion zone igniting the mixture at 900-1200 °C and introducing a hydrolysable or oxidizable silicon compound in the combustion zone at a temperature of 700-750 °C. This results in a nano-scale product in which the thickness of the coating is in the lower nanometer range.

At ambient temperatures, a silica coating is slowly dissolved in the alkaline environment of mortar or grout and, thus, effectively delays the exposure of the expanding agent cores to the water in order to control the expansion on-set time. However, at higher temperatures of, e.g., more than 60 °C, the silica coating often fails to delay the expansion on-set time.

CN 101705741 discloses a phase-change aggregate which is incorporated in a cement-containing phase-change heat insulating layer. The phase-change aggregate has a phase-change core material and a shell material in a weight ratio of 2-4:1-1.5. The phase-change core material contains 55-60 weight parts of parraffin or saturated fatty acid, 30-35 weight parts of expanded perlit particulate and 5-15 weight parts of silica sintering material or slag. The shell material is formed from 40-45 weight parts of aluminum sulfate, 50-55 weight parts of sodium silicate and 3-5 weight parts of emulsifier. The phase-change aggregate is said to have good water resistance and permanent anti-aging properties.

WO 2017/174208 A1 discloses a method to prepare a well cementing slurry, comprising coating particles comprising n expanding agent with a component selected from the group consisting of a phenolic resin, a silica, a calcination product of a polysiloxane oil, and a combination thereof; and combining the coated particles with mix water and hydraulic cement to form cement slurry for cementing a well.

GB 2511140 A discloses a method of producing a porous composite particle comprising the step of irradiating the metal hydroxide particle under conditions to increase the porosity of the metal hydroxide particle.

WO 2008/118827 A1 discloses a metal silicate coated particulate mineral material, comprising a coating comprising at least one metal silicate.

The problem underlying the invention was therefore to provide expanding agents that show a delayed expanding effect also at higher temperatures.

The invention relates to coated inorganic expanding agent particles comprising a core or a plurality of cores of an inorganic expanding agent that is capable to swell in contact with water, and a sol/gel-formed coating comprising a mixed oxide of two or more metals and/or metalloids.

The term "coated particle" refers to a particle comprising the expanding agent as a core which is at least partially coated with a sol/gel-formed coating. The term also refers to a particle comprising a sol/gel-formed matrix in which particles (i.e., a plurality of cores) of the expanding agent are dispersed throughout a sol/gel-formed matrix. Thus, the particles may comprise a single-core arrangement or configuration, i.e., a single core at least partially contained within a sol/gel-formed coating and/or may comprise a "matrix-island" arrangement or configuration in which the expanding agent is distributed at least partially within each particle as small islands within a matrix of the encapsulating sol/gel-formed coating, e.g., the expanding agent is dispersed as a discontinuous phase within the continuous coating. Unless stated otherwise, reference to a coated particle includes both single core-shell and preferably matrix-island arrangements.

Preferably, the inorganic expanding agent accounts for not less than 90 % by weight of the core(s). Typically, the core(s) are essentially free of organic matter.

An expanding agent is any inorganic material, which, when added to hydraulic cement, tends to increase the volume of the set cement. The expanding agent is an agent that is capable to swell in contact with water, e.g., a hydratable material that hydrates with water to form a product having a larger volume relative to the unhydrated material.

In an embodiment, the expanding agent comprises a metal oxide which hydrates to form an expanded product. Examples include calcium oxide, magnesium oxide, strontium oxide, barium oxide, or combinations or mixed oxides thereof. In another embodiment, the expanding agent comprises calcium oxide, magnesium oxide, or a combination thereof. In an embodiment, the expanding agent comprises calcium oxide and magnesium oxide in any mixing ratio. Specifically, the inorganic expanding agent may comprise not less than 90 % by weight, relative to the weight of the inorganic expanding agent, of at least one of calcium oxide and magnesium oxide. Thus, the inorganic expanding agent may comprise (i) not less than 90 % by weight of calcium oxide, (ii) not less than 90 % by weight of magnesium oxide, or (iii) not less than 90 % by weight of a combination of calcium oxide and magnesium oxide. In an embodiment calcium oxide and magnesium oxide are used in a molar mixing ratio of 1:100 to 100:1, or 1:20 to 20:1 or 1:10 to 10:1 or 1:5 to 5:1. In a further embodiment, the mixture of calcium oxide and magnesium oxide is obtained from dolomite so that the molar mixing ratio is 1:1. It is advisable to avoid contact of the expanding agent with water or humidity in order to keep the hydrated amount of the expanding agent thereof as low as possible.

In another embodiment the expanding agent is selected from calcium sulfate hemihydrate or anhydrite, sodium sulfate, magnesium sulfate, and sodium chloride.

In another embodiment the expanding agent is a silicate which is capable to expand in contact with water. Suitable silicates are phyllosilicates such as clays. Examples include bentonite, montmorillonite, smectite, nontronite, beidellite, perlite or vermiculite.

Suitably, the inorganic expanding agent is selected from calcium oxide, magnesium oxide, strontium oxide, barium oxide, and mixed oxides thereof, calcium sulfate hemihydrate, anhydrite, sodium sulfate, magnesium sulfate, phyllosilicates, and mixtures of two or more thereof.

Typically, upon contact with an excess of 1 M NaOH the coated inorganic expanding agent particles are capable to expand in volume by at least 100 %, preferably at least 180%, of the non-expanded volume, when contacted with an excess at after 5 days, as determined by the expansion quick test described in the experimental section that follows.

The expanding agent core (single core or dispersed cores within a matrix) may have an average particle size d(50) in the range from about 1 µm to about 100 µm, preferably in the range from about 10 µm to about 90 µm, in particular from about 20 µm to about 60 µm.

Generally, the coated inorganic expanding agent particles according to the invention have a particle size d(50) in the range from about 50 µm to about 1000 µm, in particular from about 60 µm to about 300 µm and preferably from about 60 µm to about 200 µm, as determined by SLS.

Generally, the sol/gel-formed coating has a thickness in the range from about 0.5 µm to about 50 µm, preferably in the range from about 1 µm to about 30 µm. The coating thickness may be detremined by visual inspection via scanning electron microscopy (SEM).

The coated inorganic expanding agent particles according to the invention comprise a sol/gel-formed coating comprising a mixed oxide of two or more metals and/or metalloids. In the following, the term "metal(loid)" denotes a metal and/or metalloid. The sol/gel process is a wet-chemical technique. A precursor solution or dispersion (sol) is deposited on the inorganic expanding agent cores to form a film. The sol evolves gradually towards the formation of a gel-like network. Formation of the mixed metal(loid) oxide involves connecting the metal(loid) centers via oxo (M-O-M) or hydroxo (M-OH-M) bridges, therefore generating metal(loid)-oxo or metal(loid)-hydroxo polymers in solution.

The sol/gel formed oxides are known to the skilled person and, e.g., described in Sol-gel science: The physics and chemistry of sol-gel processing, C. J. Brinker, G. W. Scherer, 1990, Academic Press Inc. The sol/gel formed oxides may be selected from oxides of various metal(loid)s, e.g., silicon, aluminum, boron, alkaline earth metals, such as magnesium, or transition metals, such as zirconium, titanium or zinc.

It has been found that the sol/gel-formed coating of mixed oxides exhibits an increased temperature and/or chemical stability in alkaline environment as compared to a sol/gel-formed coating of a single oxide. Without wishing to be bound by theory it is assumed that the presence of a dopant metal(loid) oxide facilitates the sintering or densification of the dried gel to a glass-like amorphous substance at a temperature below the liquidus for the glass.

Preferably, the sol/gel-formed coating comprises a mixed oxide of silicon and at least one other metal and/or metalloid selected from aluminum, boron, titanium, zirconium and zinc. In preferred embodiments, the weight percentage of other metal(loid)s to the sum of silicon and other metal(loid)s in the sol-gel-formed coating is from 0.1 to 15.0, preferably from 1.0 to 8.0, calculated on an elemental basis (i.e., calculated as silicon or metal(loid)). Especially preferred sol/gel-formed coatings comprise a borosilicate, an aluminosilicate or a mixed borosilicate/aluminosilicate.

According to the process of the invention, the coated inorganic expanding agent particles according to the invention have undergone a heat treatment at a temperature in the range of from 100 °C to 1000 °C or 200 °C to 800 °C or 200 °C to 500 °C or 300 °C to 400 °C.

The sol/gel-formed coating is a protective coating which delays release of the expanding agent also in alkaline systems like cementitious systems. The release of the expanding agent is achieved by slow dissolution or chemical degradation of the sol/gel-formed coating in alkaline medium (pH ≥ 10) such as in cementitious compositions or by permeation of water through the sol/gel-formed coating or by infiltration through imperfections of the coat such small cracks. Expansion of the expanding agent may also rupture the coat allowing a better contact of the expanding agent with water. The release of the expanding agent may also be effected by the action of mechanical forces such as shearing forces. The delay in release of the expanding agent may range from 0.5 h to 48 h or 3 h to 12 h. The release of the expanding agent is also delayed at higher temperatures such as 60°C to 100°C. This means that the particles may be added into a cementitious composition prior to positioning and/or setting of the cement slurry without the risk of a premature release of the expanding agent. When the expanding agent is finally released it combines with water to form a hydrated product having a larger volume relative to the unhydrated expanding agent. Due to the higher volume of the expanding agent the volume of the set cement is increased so that small gaps and cracks in the set cement will be filled or at least reduced.

The coated inorganic expanding agent particles according to the invention are prepared by a method comprising
(a) providing particles of an inorganic expanding agent,
(b) depositing a sol from sol/gel-forming precursors on the particles of the inorganic expanding agent to form a film, wherein the sol/gel-forming precursors comprise at least a first sol/gel-forming component of a first metal(loid) and a second sol/gel-forming comonent of a second metal(loid),
(c) gelling the sol,
(d) drying the coated particles to a water content of 0.5% to 5% by weight, and
(e) subjecting the coated particles to a heat treatment at a temperature from 100°C to 1000°C.

The expanding agent may be used in powder form. In an embodiment, the particles of the expanding agent have an average particle size d(50) in the range from about 1 µm to about 100 µm, preferably in the range from about 10 µm to about 90 µm, in particular from about 20 µm to about 60 µm, prior to coating, as determined by static light scattering (SLS).

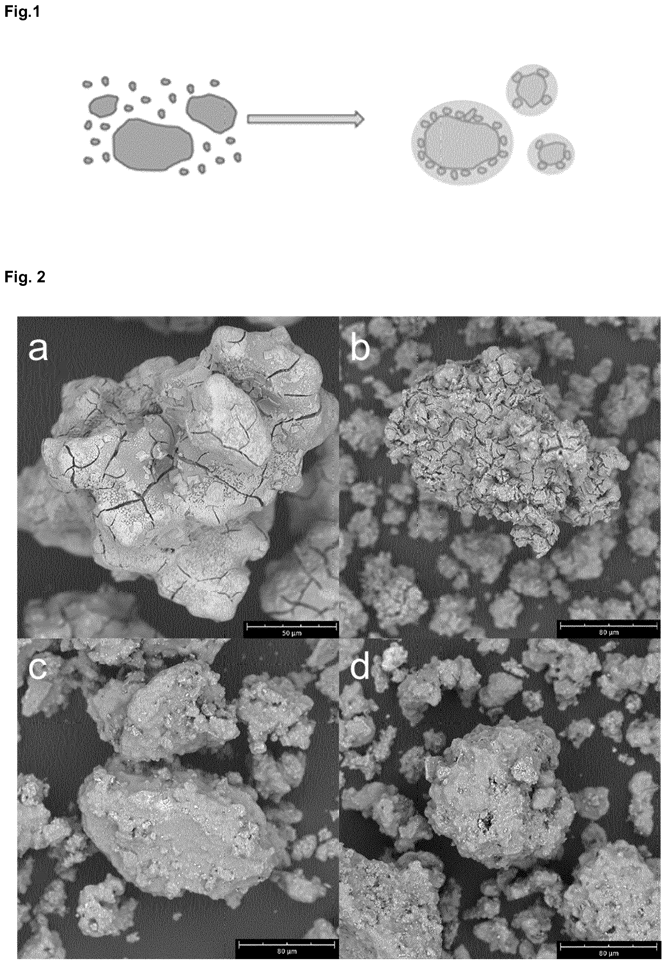

A sol from sol/gel-forming precursors is deposited on the particles of the inorganic expanding agent to form a film. Deposition of the sol on the particles of the inorganic expanding agent particles may in some instances involve the agglomeration of smaller inorganic expanding agent particles around a larger inorganic expanding agent particle. The smaller particles will eventually become embedded in a sol/gel-formed matrix around a core of a larger inorganic expanding agent particle (Fig. 1).

According to the invention, the sol/gel-forming precursors are such that form a mixed oxide of two or more metal(loid)s. The sol/gel-forming precursors comprise at least a first sol/gel-forming component of a first metal(loid) and a second sol/gel-forming component of a second metal(loid). The sol/gel-forming precursors may be hydrolytic or non-hydrolytic sol/gel forming components. It will be appreciated that it is not necessary for each of the components if taken alone to be capable of forming a sol/gel as long as their mixture can form a sol/gel.

In a typical hydrolytic sol/gel processing, the sol/gel components are contacted with the inorganic expanding agent particles in the presence of water. Non-hydrolytic sols may be made in a similar manner, but likely essentially in the absence of water.

The sol/gel forming components may be selected from alkoxides, oxides, carbonates, formats, acetates, sulfates, nitrates, halides of various metal(loid)s, with alkoxides, oxides, acetates, nitrates being preferred. The metal(loid) alkoxides can have the general formula M(OR)ₓ, wherein M is any metal(loid) from a metal(loid) alkoxide which, e.g., may hydrolyze and polymerize in the presence of water. R is an alkyl radical of 1 to 30 carbon atoms, which may be straight chained or branched, and x has a value equivalent to the metal(loid) ion valence. Metal(loid) alkoxides such as Si(OR)₄, Ti(OR)₄, Al(OR)₃, Zr(OR)₃ and Sn(OR)₄ may be used. Specifically, R can be the methyl, straight-chain, or branched ethyl, propyl or butyl radical. Further examples of suitable metal alkoxides can include Ti(isopropoxy)₄, Al(isopropoxy)₃, Al(sec-butoxy)₃, Zr(n-butoxy)₄ and Zr(n-propoxy)₄.

The sol/gel components used in the sols may also comprise colloidal metal oxides, preferably those colloidal metal oxides which are stable long enough to be able to combine them with the other sol/gel components. Such colloidal metal oxides may include, but are not limited to, SiO₂, Al₂O₃, MgO, ZrO₂, TiO₂, SnO₂, B₂O₃, La₂O₃, Sb₂O₅ and ZrO(NO₃)₂. SiO₂, Al₂O₃, B₂O₃, and ZrO₂ may be preferably selected. Further examples of the at least one sol/gel forming component include aluminum hydroxide sols or gels, aluminumtri-sec-butylat, AlOOH-gels and the like.

The sol/gel components used in the sols may also comprise water-soluble alkali metal silicates.

The sol may be a solution, colloidal solution or dispersion, preferably an aqueous solution, colloidal solution or dispersion. Deposition of the sol on the particles of the inorganic expanding agent particles is achieved by applying, in particular by spraying. It is advantageous to use the fluidized bed technology or the spouted bed technology for depositing the sol onto the inorganic expanding agent particles. The particles of the inorganic expanding agent are placed into the fluidized bed or spouted bed apparatus and the apparatus is put into operation. As soon as the content of the apparatus has reached the operating temperature, the sol/gel-forming precursors are applied. The sol/gel-forming precursors are used in an amount such that the weight ratio of inorganic expanding agent to the mixed oxide formed from the sol/gel-forming precursors is in the range from 15:1 to 1:2, preferably from 10:1 to 1:1.

In an embodiment, the first sol/gel-forming component is a silica precursor. The term "silica precursor" means a compound that can be converted to silica either by heating the precursor during the drying step or by using a conversion agent. The silica precursor may be an alkali metal silicate or a precondensed alkali metal silicate that can be further condensed and converted to the silica network by said heating or conversion agent.

In an embodiment, the silica precursor is a water-soluble alkali metal silicate (here water-soluble means an alkali metal silicate having a solubility of ≥ 100 g alkali metal silicate per 1L water). In another embodiment, the alkali metal silicate is selected from compounds having the empirical formula m SiO₂ · n M₂O, where M stands for Li, Na, K, and NH₄, and also mixtures thereof, preferably for Na and K. The molar ratio m:n (also called "modulus") is advantageously 0.5 to 4.0, preferably 1.0 to 4.0 and more particularly 2.0 to 4.0 or 2.6 to 4.0 or 2.3 to 3.5. The alkali metal silicate is preferably water glass, more preferably a liquid water glass, and more particularly a sodium or potassium water glass. Use may also be made, however, of lithium or ammonium water glasses, and also of mixtures of the said water glasses.

Water glasses in the above modulus range are commercially available as aqueous solutions. The solids contents of the aqueous water glass solutions are generally 20% to 60% by weight, preferably 30% to 50% by weight.

In another embodiment the silica precursor is a dialkoxysilane, trialkoxysilane or tetraalkoxysilane (the alkyl group in said silane is preferably a C₁-C₄ alkyl group). The silanes are applied in a solvent that can be water and/or water miscible solvents (e.g. acetone).

The silica precursor is used as an aqueous solution which preferably contains the precursor in a concentration of 5% to 40% by weight, in particular 5% to 30% by weight.

Suitably, the second sol/gel-forming component is selected from a sol/gel-forming compound of aluminum, boron, titanium, zirconium and/or zinc, preferably from boric acid, borax, an aluminum salt and/or an alkali metal aluminate.

Gelation may in some instances self-initiate, for example, when water is present in the inorganic expanding agent particles or the solvent, or via rapid drying, such as spray drying. In other instances, gelation must be initiated, which can be achieved in a number of ways.

Gelation is dependent on a number of factors such as the amount of water present, because water is required for the hydrolysis and condensation reaction. Other factors include temperature, solvent type, concentrations, pH, pressure and the nature of the acid or base used.

Typically, either acidic or basic catalysts may be applied, particularly in hydrolytic sol/gel processes. Suitable acids are water-soluble (water-soluble means an acid having a solubility of ≥ 100 g per 1L water) inorganic and organic acids having a pKa of ≤ 5. Examples for such acids are hydrochloric acid, hydrobromic acid, sulfuric acid, phosphoric acid, nitric acid, methane sulfonic acid, toluene sulfonic acid, benzene sulfonic acid, formic acid, acetic acid, etc. The concentration of the acid is advantageously ≤ 1.5 N, in particular ≤ 1.2 N. Suitable bases include, for example, sodium hydroxide, ammonia and carbonate as well as organic amines. Suitable catalysts in non-hydrolytic sol/gel processes can include anhydrous halide compounds, for example, BCl₃, NH₃, AlCl₃, TiCl₃ or mixtures thereof.

If the precursor is an alkoxysilane, for example tetraethoxysilane, the conversion is initiated by the addition of water, preferably of acidic or alkaline pH (for example, pH 3-4 or 10-11) and a water-miscible organic solvent such as ethanol.

The pH can be achieved in a number of ways, for example, by adding an acid or base to the sol/gel-forming precursor solution or by adding the sol/gel-forming precursor solution to the acid or base, or by adding a metal oxide to the solution than adjusting pH with acid or base.

In a particularly preferred embodiment, a first solution containing an acid-catalyzed sol/gel-forming component is prepared at a pH at which the acid-catalyzed sol/gel-forming component is stable. Typically, the acid-catalyzed sol/gel-forming component is a silica precursor such as a water-soluble alkali metal silicate. The pH of the first solution may be in the range of from 10 to 12. A second solution containing a base-catalyzed sol/gel-forming component is prepared at a pH at which the base-catalyzed sol/gel-forming component is stable. Typically, the base-catalyzed sol/gel-forming component is boric acid, or a sulfate or nitrate of a metal such as aluminum. The pH of the second solution may be in the range of from 1 to 5. The first solution and the second solution are then combined and deposited onto the inorganic expanding agent particles. Deposition onto the inorganic expanding agent particles preferably is carried out by spraying, with the following options:
(1) The first solution and the second solution are mixed before spraying. Preferably, the pH of the mixed solutions is still in the alkaline range, i.e. in the range from 8 to 10. This results in a sol/gel-forming precursor solution in which the condensation is advanced but not yet completed. This precursor solution is then applied to the particles of the inorganic expanding agent and the condensation to the extended network is completed at the drying temperature.
(2) Only a part of the second solution is added to the first solution prior to the application of the precursor solution to the inorganic expanding agent particles. The pH of the mixed solution is still in the alkaline range, i.e. in the range from 10 to 12. This achieves a partial condensation of the sol/gel-forming precursors which is less advanced relative to (1) above. The precursor solution is then applied to the particles of the inorganic expanding agent by spraying it into the operating fluidized bed or spouted bed apparatus. A second part of the second solution can then be applied simultaneously with or subsequently to the mixed sol/gel-forming precursor solution by spraying it into the operating fluidized bed or spouted bed apparatus.
(3) The first solution is applied to the particles of the inorganic expanding agent and simultaneously the second solution is applied by spraying them into the operating fluidized bed or spouted bed apparatus. This includes that the second solution is applied at any time after the application of the first solution has already begun. In an embodiment of option (3) the total of the first solution is applied first and the total of the second solution is applied subsequently and either immediately after the first solution has been applied or after a short period of time. In a further embodiment of option (3) the first solution and the conversion agent are applied intermittently beginning with the first solution. First solution and second solution may be applied immediately after each other or after a specific period of time. In a further embodiment, steps (b) and (c) can be carried out two or more times in order to obtain particles having a thicker coating.

It is critical to avoid premature swelling of the inorganic expanding agent. This has to be achieved by control of the amount of water available at any moment of the process. In this regard it is advantageous to use the fluidized bed technology or the spouted bed technology. In an embodiment, a drying step is carried out simultaneously with and/or subsequent to step (b) and/or step (c). The drying step allows control of the excess amount of water contained in the sol/gel forming precursor solutions and the water formed by polycondensation of the sol/gel forming precursors. Also, the drying assists in the gelation of the sol deposited on the particles of the inorganic expanding agent. Suitably, the drying step is carried out at a temperature in the range from about 40 °C to about 120 °C, preferably about 50 °C to about 100 °C.

The spouted bed technology and, in particular, the fluidized bed technology for drying the particles can be carried out in a conventional apparatus such as those commercially available from Glatt GmbH, 79589 Binzen, Germany. The drying conditions are selected such that the temperature of the particles is maintained in the range from 40 °C to 120 °C, in particular 50 °C to 100 °C during the drying operation, i.e. the drying is done such that the exit temperature of the drying gas (normally air) is in the range from 40 °C to 120 °C. To achieve this the supply gas temperature is, in general, selected in the range from 60 °C to 200 °C, in particular 80 °C to 140 °C whereas the other parameters will have to be selected depending on the type and size of the apparatus and the batch size.

For feeding the reagents, conventional nozzles can be used such as a two-substance nozzle or a three-substance nozzle.

The coated particles are dried to a water content of 0.5% to 5% by weight.

After the drying of the coated particles is finished they are subjected to a heat treatment in the range from 100 °C to 1000 °C or 200 °C to 800 °C or 200 °C to 500 °C or 300 °C to 400 °C. In one embodiment the heat-up rate is 1 to 5 °C/min. In a further embodiment the heating time is from 0.5h to 12h or 1h to 6h or 1h to 4h or 2h to 4h. After the heat treatment the particles are cooled down. In an embodiment the cool down phase is from 0.5h to 24h or 0.5h to 12h or 1h to 8h or 2h to 8h or 4h to 8h. Any apparatus can be used for the heat-treatment, such as a rotary kiln or calciner, conveyor belt furnace, etc.

Depending on the amount of sol/gel-forming precursors and the heat treatment temperature and time it is possible to design the properties of the particles according to the needs of the user. This means that the delay in release of the expanding agent can be controlled by the amount of coating and by the heat treatment. Within the above-mentioned boundaries it can be said that the higher the amount of coating and/or the longer the heating time, the slower the heating rate and the slower the cool down time, the longer is the delay of the release of the expanding agent.

The invention further relates to compositions comprising the particles of the invention and a binder. In an embodiment the composition may be a cementitious composition or construction chemical composition comprising the particles of the invention and a hydraulic binder, such as cement. The cementitious composition may be in solid form or in the form of a cement slurry. Depending on the intended use the composition may comprise additives such as hardening accelerators, such as calcium silicate hydrate, retarders, dispersing agents etc. According to an embodiment, the composition is a building material composition which comprises a hydraulic binder such as cement, in particular OPC (ordinary Portland cement), high alumina cement, a latent hydraulic binder or a non-hydraulic binder such as gypsum, including α- and β-hemihydrate or anhydrite.

Portland cements are generally preferred for use in accordance with the present invention, and Portland cements of the types defined and described in API Specification For Materials And Testing For Well Cements, API Specification 10, 5th Edition, dated Jul. 1, 1990 of the American Petroleum 25 Institute and their equivalents are particularly preferred. API Portland cements including classes A, B, C, G and H can be utilized with API classes G and H being preferred and class H being the most preferred.

According to a further embodiment, the construction chemical composition comprises a geopolymer binder. The geopolymer binder may be selected from latent hydraulic binders, pozzolanic binders and/or alkali-activated aluminosilicate binders, and mixtures thereof.

The latent hydraulic binders may be selected from industrial or synthetic slags, for example blast furnace slag, granulated blast furnace slag, ground granulated blast furnace slag, slag sand, ground slag sand, electrothermic phosphorus slag, steel slag, and mixtures thereof, and the pozzolanic binders may be selected from amorphous silica, for example precipitated silica, pyrogenic silica and microsilica, finely ground glass, fly ash, for example brown-coal fly ash or mineral coal fly ash, metakaolin, natural pozzolans such as tuff, trass and volcanic ash, natural and synthetic zeolites, and mixtures thereof.

Aluminate cement ("high-alumina cement") comprises about 20% to 40% by weight CaO, up to about 5% by weight SiO₂, about 40% to 80% by weight Al₂O₃ and up to about 20% by weight Fe₂O₃.

The slags may be both industrial slags, i.e. waste products from industrial processes, and synthetically reproduced slags. The latter slags provide the advantage that they are always available in consistent quantity and quality.

A latent hydraulic binder may be a binder in which the molar ratio of (CaO + MgO):SiO₂ is of between 0.8 and 2.5, preferably between 1.0 and 2.0.

Blast furnace slag, a typical latent hydraulic binder, generally comprises 30% to 45% by weight CaO, about 4% to 17% by weight MgO, about 30% to 45% by weight SiO₂ and about 5% to 15% by weight Al₂O₃, for example about 40% by weight CaO, about 10% by weight MgO, about 35% by weight SiO₂ and about 12% by weight Al₂O₃. The cured products generally have the properties of hydraulically cured systems.

"Blast furnace slag" is a waste product of the blast furnace process. "Slag sand" is granulated blast furnace slag, and "ground granulated blast furnace slag" is finely pulverized slag sand. The ground slag sand varies, according to origin and processing form, in its particle size and grain-size distribution, with the particle size affecting the reactivity. As a characteristic variable for the particle size, the figure known as the Blaine value is employed, which is typically in the order of magnitude of 200 m² kg⁻¹ to 1000 m² kg⁻¹, preferably between 300 m² kg⁻¹ and 500 m² kg⁻¹.

Electrothermic phosphorus slag is a waste product from the production of phosphorus by electrothermic means. It is less reactive than blast furnace slag and comprises about 45% to 50% by weight CaO, about 0.5% to 3% by weight MgO, about 38% to 43% by weight SiO₂, about 2% to 5% by weight Al₂O₃ and about 0.2% to 3% by weight Fe₂O₃, and also fluoride and phosphate. Steel slag is a waste product from various steel manufacturing processes, with a highly varying composition (see Caijun Shi, Pavel V. Krivenko, Della Roy, Alkali-Activated Cements and Concretes, Taylor & Francis, London & New York, 2006, pp. 42-51).

Amorphous silica is preferably an X-ray-amorphous silica, i.e. a silica which exhibits no crystallinity in a powder diffraction procedure. The amorphous silica for example comprises SiO₂ in an amount of at least 80% by weight, preferably at least 90% by weight. Precipitated silica is obtained industrially via precipitation processes starting from water glass. Depending on the manufacturing method, precipitated silica is also called silica gel. Pyrogenic silica is generated by reacting chlorosilanes, such as silicon tetrachloride, in an oxyhydrogen flame. Pyrogenic silica is an amorphous SiO₂ powder with a particle diameter of 5 nm to 50 nm and a specific surface area of 50 m² g⁻¹ to 600 m² g⁻¹.

Microsilica is a by-product of silicon or ferrosilicon manufacture and comprises amorphous SiO₂ powder. The particles have diameters of about 0.1 µm. The specific surface area is about 15 m² g⁻¹ to 30 m² g⁻¹. In contrast, commercial silica sand is crystalline and has comparatively larger particles and a comparatively lower specific surface area.

Fly ashes are for example formed in operations including the combustion of coal in power stations. Class C fly ash (brown coal fly ash) comprises, according to WO 08/012438, about 10% by weight CaO, whereas class F fly ash (mineral coal fly ash) comprises less than 8% by weight, preferably less than 4% by weight, and typically about 2% by weight, CaO.

Metakaolin may be formed in the dehydrogenation reaction of kaolin. Kaolin releases bound water at 100 °C to 200 °C, dehydroxylation occurs at 500 °C to 800 °C, with collapse of the lattice structure and formation of metakaolin (Al₂Si₂O₇). Pure metakaolin, accordingly, comprises about 54% by weight SiO₂ and about 46% by weight Al₂O₃.

Further pozzolanic binders are for example shown in Caijun Shi, Pavel V. Krivenko, Della Roy, Alkali-Activated Cements and Concretes, Taylor & Francis, London & New York, 2006, pp. 51-63. Testing for pozzolan activity can take place in accordance with DIN EN 196 Part 5.

The above-mentioned alkali-activated aluminosilicate binders may comprise latent hydraulic and/or pozzolanic binders as defined above and also alkaline activators, such as aqueous solutions of alkali metal carbonates, alkali metal fluorides, alkali metal hydroxides, alkali metal aluminates and/or alkali metal silicates, such as soluble water glass, magnesia cement, phosphate cement, or calcium oxide.

The construction chemical compositions may additionally contain additives such as glycols, polyalcohols, aminoalcohols, organic acids such as citric acid or tartaric acid, sugars, melasses, organic and inorganic salts, polycarboxylate ethers, naphthalene sulfonate, melamine-formaldehyde polycondensates, lignin sulfonate, as well as mixtures thereof. Further suitable additives are defoamers, water retention agents, pigments, fibers, dispersion powders, wetting agents, retarders, hardening accelerators, such as calcium silicate hydrate, complex forming agents, aqueous dispersions and rheology modifiers.

In a further embodiment, the construction chemical compositions may be selected from compositions for concretes such as on-site concrete, finished concrete parts, pre-cast concrete parts, concrete goods, cast concrete stones, concrete bricks, in-situ concrete, sprayed concrete (shotcrete), ready-mix concrete, air-placed concrete, concrete repair systems, industrial cement flooring, one-component and two-component sealing slurries, screeds, filling and (self)-levelling compositions, such as joint fillers or self-levelling underlayments, adhesives, such as building or construction adhesives, thermal insulation composite system adhesives, tile adhesives, renders, plasters, adhesives, sealants, coating and paint systems, in particular for tunnels, waste water drains, splash protection and condensate lines, screeds, such as anhydrite or hemihydrate or cement based screeds, mortars, such as dry mortars, sag resistant, flowable or self-levelling mortars, drainage mortars, or repair mortars, grouts, such as joint grouts, non shrink grouts, or wind-mill grouts, anchor grouts, EIFS grouts (Exterior Insulation Finishing Systems), or swelling explosives.

In a further embodiment, the construction chemical composition may be a well cementing composition or slurry comprising cement and the particles of the invention. They are useful for strengthening a well bore (oil well, gas well or water well), in particular for the exploration and/or recovery of oil, gas or water.

In a further embodiment, the composition comprises a binder which may be selected from polyurea silicate compositions. The polyurea silicate composition is obtainable by reacting a mixture comprising (i) at least one isocyanate component having at least two isocyanate groups per molecule, (ii) at least one alkali metal silicate, and (iii) water. These compositions are disclosed in WO 2014/096349 which is incorporated herein by reference in its entirety, in particular, page 2, 3^{rd} paragraph to page 6, 3^{rd} paragraph, page 7, full paragraphs 1 to 3 and the claims. Construction chemical compositions comprising said polyurea silicate composition are useful for strengthening a well bore (oil well, gas well or water well), in particular for the exploration and/or recovery of oil, gas or water. The construction chemical compositions are further useful for coatings, adhesives, sealants, flooring, and injection resins.

In a further embodiment, the composition comprises polymer dispersions as a binder. Such compositions are useful for coatings and adhesives.

In an embodiment, the expanding agent is present in the composition at a concentration greater than or equal to about 0.1 weight percent based on the total weight of hydraulic cement present, or greater than or equal to about 0.5 weight percent, or greater than or equal to about 1 weight percent, and less than or equal to about 25 weight percent, or less than or equal to about 20 weight percent, or less than or equal to about 15 weight percent, or less than or equal to about 10 weight percent, or less than or equal to about 5 weight percent, based on the weight of hydraulic cement present. For example, the slurry may comprise from 0.1 to 20 weight percent of the coated particles, or from 0.5 to 10 weight percent of the coated particles, or from 1 to 5 weight percent of the coated particles, based on the weight of the hydraulic cement.

A further embodiment is a method to cement a subterranean well having a borehole disposed through a formation, comprising: (i) preparing a cement slurry comprising water, hydraulic cement, and the coated particles of the invention and combining the capsules with water and hydraulic cement; (ii) placing the slurry in an annular region of the well around a tubular body; (iii) hardening the slurry to form an at least partially set cement; and (iv) hydrating the expanding agent to form an expanded set cement within the annular region. In embodiments, the method further comprises forming bonds between the expanded set cement, the tubular body and a wall of the borehole, and/or isolating a zone of the formation adjacent the expanded set cement.

The invention also relates to the use of the particles of the invention for preparing a well cementing slurry by combining the particles with water and cement.

In accordance with the above, the invention provides the following embodiments:
The attached drawings and the following examples illustrate the invention without limiting it.

### BRIEF DESCRIPTION OF THE DRAWINGS

Figure 1 is a schematic illustration of the production process for coated inorganic expanding agent particles.
Figure 2 shows representative SEM images of the coated inorganic expanding agent particles after calcination. a. with silica shell (Ref.), b. with Si/Al-oxide (sample 6), c. with Si/B-oxide (sample 5) and d. with Si/B/Al-oxide (sample 7).
Figure 3a shows cement expansion profiles of the inventive coated inorganic expanding agent particles in comparison with silica-coated expanding agents (Reference) for the full test period (> 48h); Fig. 3b shows expansion profiles of the initial 8h.

The particle size d(50) is determined by static light scattering (SLS) using a Malvern Mastersizer 2000 (Malvern Instruments GmbH, Germany). The software utilized for measurement and evaluation is the Malvern software package belonging to the instrument. The measurement principle is based on laser diffraction by measuring the intensity of light scattered as a laser beam passes through a particulate sample. This data is then analyzed to calculate the size of the particles that created the scattering pattern.

Quick test for determining the expansion of the expanding agent particles:
3 g of the particles to be tested are placed in glass containers having a diameter of 2 cm and a height of about 8 cm. The particles are then dispersed in 10 ml of a 1 M NaOH by shaking and allowed to settle. The height of the sediment is determined. Thereafter, the particles are allowed to expand at 60°C. The height of the expanded particles is measured after a 5 days.

In the examples the following sodium water glasses were used:
NaSi 37/40: 8 % Na₂O, 26.8 % SiO₂ and 65.2 % H₂O; modulus 3.4; solids content 34.8 %.
NaSi 40/42: 8.8 % Na₂O, 29.5 % SiO₂ and 61.7 % H₂O; modulus 3.4; solids content 38.3 %.

### Example 1. Sol/gel coating with mixed precursor solution

A basic precursor solution was prepared by diluting 75 parts of NaSi 40/42 with 25 parts of water with stirring. An acidic solution was prepared with boric acid or sodium aluminate in the concentrations and amounts given in tables 1 below. The acidic solution was added slowly with vigorous stirring to the basic precursor solution. The data are given in tables 1 below.

CaO/MgO particles (mixture in a molar ratio of 1:1) having a particle size d(50) of 40µm and a particle size distribution of (d(90) 200µm / d(10) 2µm) were placed into a pilot fluidized bed apparatus in which the particles were heated to 65 °C. The basic precursor solution was sprayed onto the particles via bottom spray (air inlet temperature: 120-130 °C; outlet temperature: 65 °C; gas volume: 47 m³/h; drying gas velocity: 0.9-1.0 m/s; nozzle gas volume: 4-7.5 m³/h; nozzle pressure: 3.3 bar). The dried particles had a water content of < 1 % by weight.

All the coated particles described in the examples were calcined as following method. The coated particles were placed into ceramic crucibles and heated in a muffle furnace. The particles were heated within 2h to the selected temperature (325 °C ~ 350 °C). The selected temperature was maintained for 3h and thereafter the particles were allowed to cool to room temperature within 3h to 9h.

**Table 1**

| **Sample** | **CaO/MgO in kg** | **Water glass solution** | **NaSi in g** | **coating in g** | **relative** | **Acidic Solution** |
|---|---|---|---|---|---|---|
| Ref. | 2 | NaSi 40/42 75% | 1810 | 500 | 20% | 0.5M HCl 1448g |
| 1 | 2 | NaSi 40/42 75% | 1810 | 500 | 20% | 4% boric acid 1448g |
| 2 | 2 | NaSi 40/42 75% | 1810 | 500 | 20% | 4% boric acid 724g + 1,3%NaAlO₂ 724g |

| | | | | | | |
|---|---|---|---|---|---|---|
| ²⁾ The boric acid and sodium aluminate were mixed before spraying | | | | | | |

### Example 2. Sol/gel coating by alternating spray of precursor solutions

A basic precursor solution was prepared by diluting 90 parts of NaSi 37/40 with 10 parts of water with stirring (sample 3) or using neat NaSi 37/40 (sample 4). The acidic solution was prepared with boric acid in the concentrations given in table 2 below. The basic precursor solution (BS) and the acidic solution (AS) were sprayed alternately in the following order: 40% of BS, 50% of AS, 40% of BS, 50% of AS, and 20% of BS.

**Table 2**

| **Sample** | **CaO/MgO in kg** | **water glass solution** | **NaSi in g** | **coating in g** | **relative** | **Acidic Solution** |
|---|---|---|---|---|---|---|
| 3 | 2 | NaSi 37/40 90% | 1590 | 499 | 20% | 4% boric acid 1400g |
| 4 | 2 | NaSi 37/40 100% | 1410 | 492 | 20% | 4% boric acid 1400g |

### Example 3. Sol/gel coating by simultaneous spray of precursor solutions

A basic precursor solution was prepared by diluting 90 parts of NaSi 37/40 with 10 parts of water with stirring (sample 5) or diluting 75 parts of NaSi 37/40 with 25 parts of water with stirring (samples 6 and 7). The acidic solution was prepared with boric acid or sodium aluminate in the concentrations and amounts given in table 3 below.

The basic precursor solution and the acidic solution were sprayed simultaneously via the bottom nozzle (spraying upwards) and via the top nozzle (spraying downwards) respectively.

**Table 3**

| **Sample** | **CaO/MgO in kg** | **water glass solution** | **NaSi in g** | **coating in g** | **relative** | **Acidic Solution** |
|---|---|---|---|---|---|---|
| 5 | 2 | NaSi 37/40 90% | 1590 | 499 | 20% | 3,5% boric acid 1590g |
| 6 | 2 | NaSi 37/40 75% | 1890 | 495 | 20% | 10% aluminum sulfate 1890g |
| 7 | 2 | NaSi 37/40 75% | 1890 | 495 | 20% | 3% boric acid 945g 10% al. sulfate 945g (total 1890g) |

| | | | | | | |
|---|---|---|---|---|---|---|
| ⁷⁾ The boric acid and aluminum sulfate solutions were mixed before spraying | | | | | | |

### Example 4. Expansion test of the core-shell expanding agents

The expansion test for concrete was carried out in accordance with DIN EN ISO 10426-5 by making a well cement slurry including 10 % by weight of cement (bwoc) of the particles of the invention, 0.5% (bwoc) Liquiment K3F (dispersant, sulfonated acetone resin), 0.6% bwoc Polytrol FL34 (fluid loss additive, modified polyacrylamide) and a small amount <0.1% by volume defoamer (triisobutylphosphate).

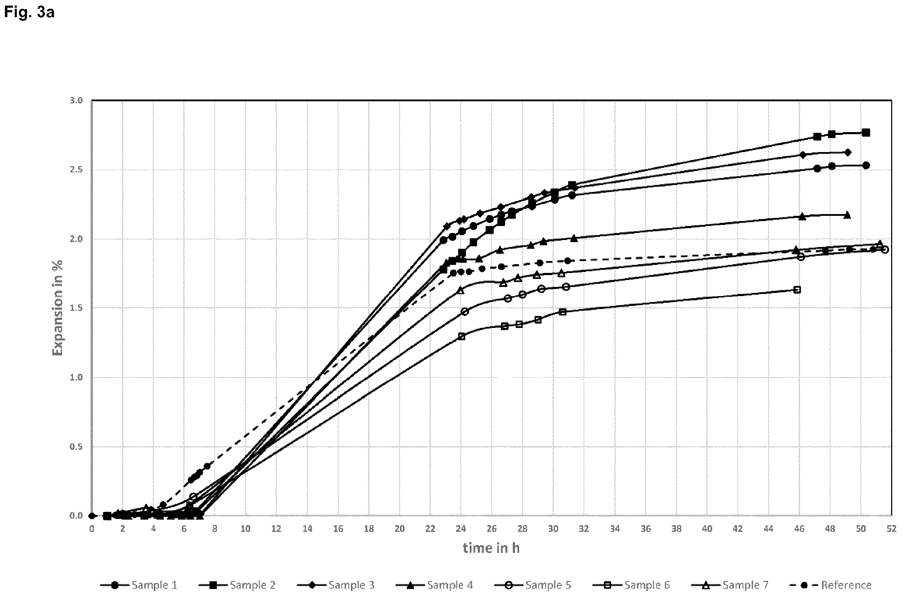

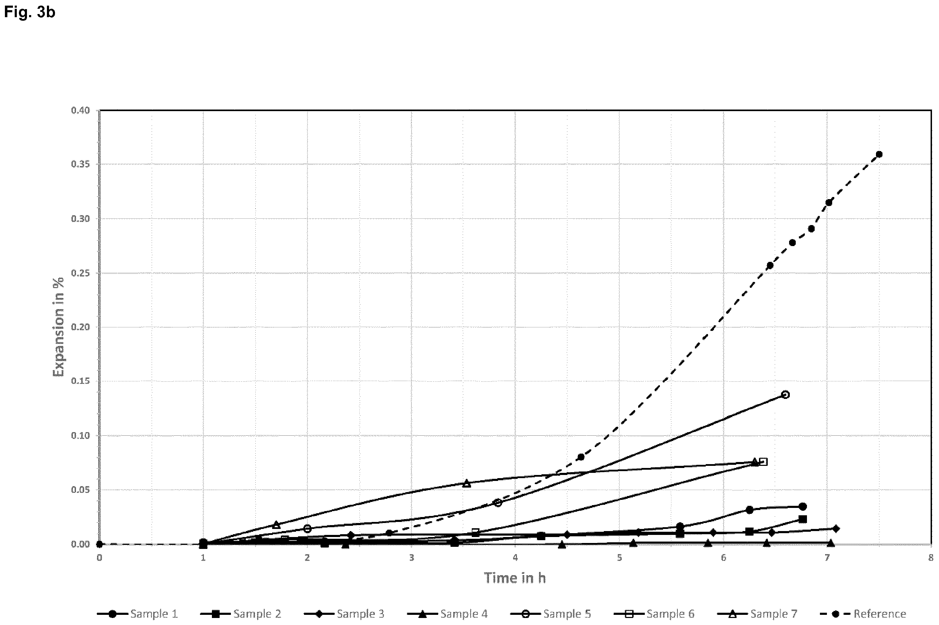

The percentage expansion over the time is shown in Fig. 3. As seen in Fig. 3, all core-shell expanding agents with a sol/gel-formed coating comprising a mixed oxide of B and Si, Al and Si or B/AI and Si showed retarded on-set time of expansion as compared to the reference sample with silica shell.

## Claims

1. Coated inorganic expanding agent particles comprising a core or a plurality of cores of an inorganic expanding agent that is capable to swell in contact with water, and a sol/gel-formed coating comprising a mixed oxide of two or more metals and/or metalloids.

2. The coated inorganic expanding agent particles of claim 1, wherein the inorganic expanding agent accounts for not less than 90 % by weight of the core(s).

3. The coated inorganic expanding agent particles of claim 1 or 2, wherein the inorganic expanding agent is selected from calcium oxide, magnesium oxide, strontium oxide, barium oxide, and mixed oxides thereof, calcium sulfate hemihydrate, anhydrite, sodium sulfate, magnesium sulfate, phyllosilicates, and mixtures of two or more thereof.

4. The coated inorganic expanding agent particles of claim 3, wherein the inorganic expanding agent comprises not less than 90 % by weight of at least one of calcium oxide and magnesium oxide.

5. The coated inorganic expanding agent particles of any one of the preceding claims, wherein the sol/gel-formed coating comprises a mixed oxide of silicon and at least one other metal and/or metalloid selected from aluminum, boron, titanium, zirconium and zinc.

6. The coated inorganic expanding agent particles of claim 5, wherein the mixed oxide comprises 0.1 to 15.0 % by weight, preferably 1.0 to 8.0 % by weight, of the other metal and/or metalloid, relative to the sum of silicon and metal and/or metalloid calculated on an elemental basis.

7. The coated inorganic expanding agent particles of any one of the preceding claims, having a particle size d(50) in the range from about 50 µm to about 1000 µm as determined by SLS.

8. The coated inorganic expanding agent particles of any one of the preceding claims, wherein the weight ratio between inorganic expanding agent and the sol/gel-formed coating is in the range from 15:1 to 1:2, preferably 10:1 to 1:1.

9. A method for preparing coated inorganic expanding agent particles according to any one of the preceding claims, comprising
(a) providing particles of an inorganic expanding agent that is capable to swell in contact with water,
(b) depositing a sol from sol/gel-forming precursors on the particles of the
inorganic expanding agent to form a film, wherein the sol/gel-forming precursors comprise at least a first sol/gel-forming component of a first metal(loid) and a second sol/gel-forming comonent of a second metal(loid),
(c) gelling the sol,
(d) drying the coated particles to a water content of 0.5% to 5% by weight, and
(e) subjecting the coated particles to a heat treatment at a temperature from 100°C to 1000°C

10. The method of claim 9, wherein the temperature in course of step (e) is from 200°C to 500°C.

11. The method of claim 9 , wherein the first sol/gel-forming component is a silica precursor and the second sol/gel-forming component is selected from a sol/gel-forming compound of aluminum, boron, titanium, zirconium and/or zinc, preferably from boric acid, borax, an aluminum salt or an alkali metal aluminate.

12. The method of claim 11, comprising
- preparing a first solution comprising a water-soluble alkali metal silicate at a pH of from 10 to 12,
- preparing a second solution comprising a sol/gel-forming compound of aluminum, boron, titanium, zirconium and/or zinc, preferably boric acid and/or an aluminum salt, at a pH of from 1 to 5,
- combining the first solution and the second solution and depositing the mixed solution on the inorganic expanding agent particles.

13. The use of the coated inorganic expanding agent particles of any one of claims 1 to 8 as a constituent of building material formulations and/or for producing building products, in particular for concretes such as on-site concrete, finished concrete parts, pre-cast concrete parts, concrete goods, cast concrete stones, concrete bricks, in-situ concrete, sprayed concrete (shotcrete), ready-mix concrete, air-placed concrete, concrete repair systems, industrial cement flooring, one-component and two-component sealing slurries, screeds, filling and self-levelling compositions, such as joint fillers or self-levelling underlayments, adhesives, such as building or construction adhesives, thermal insulation composite system adhesives, tile adhesives, renders, plasters, adhesives, sealants, coating and paint systems, in particular for tunnels, waste water drains, splash protection and condensate lines, screeds, mortars, such as dry mortars, sag resistant, flowable or self-levelling mortars, drainage mortars, or repair mortars, grouts, such as joint grouts, non-shrink grouts, wind-mill grouts, anchor grouts, EIFS grouts (Exterior Insulation Finishing Systems) or swelling explosives.

## Patentansprüche

1. Beschichtete anorganische Quellmittelpartikel, umfassend einen Kern oder eine Vielzahl von Kernen aus einem anorganischen Quellmittel, das fähig ist, in Kontakt mit Wasser zu quellen, und eine Sol/Gel-gebildete Beschichtung, die ein Mischoxid von zwei oder mehr Metallen und/oder Metalloiden umfasst.

2. Beschichtete anorganische Quellmittelpartikel gemäß Anspruch 1, wobei das anorganische Quellmittel nicht weniger als 90 Gew.-% des Kerns/der Kerne bildet.

3. Beschichtete anorganische Quellmittelpartikel gemäß Anspruch 1 oder 2, wobei das anorganische Quellmittel ausgewählt ist aus Calciumoxid, Magnesiumoxid, Strontiumoxid, Bariumoxid und Mischoxiden davon, Calciumsulfathemihydrat, Anhydrit, Natriumsulfat, Magnesiumsulfat, Phyllosilicaten und Gemischen von zwei oder mehr davon.

4. Beschichtete anorganische Quellmittelpartikel gemäß Anspruch 3, wobei das anorganische Quellmittel nicht weniger als 90 Gew.-% an wenigstens einem von Calciumoxid und Magnesiumoxid umfasst.

5. Beschichtete anorganische Quellmittelpartikel gemäß einem der vorstehenden Ansprüche, wobei die Sol/Gelgebildete Beschichtung ein Mischoxid von Silicium und wenigstens einem anderen Metall und/oder Metalloid ausgewählt aus Aluminium, Bor, Titan, Zirkonium und Zink umfasst.

6. Beschichtete anorganische Quellmittelpartikel gemäß Anspruch 5, wobei das Mischoxid 0,1 bis 15,0 Gew.-%, vorzugsweise 1,0 bis 8,0 Gew.-%, an dem anderen Metall und/oder Metalloid, bezogen auf die Summe von Silicium und Metall und/oder Metalloid, berechnet auf Elementbasis, umfasst.

7. Beschichtete anorganische Quellmittelpartikel gemäß einem der vorstehenden Ansprüche mit einer Partikelgröße d(50) in dem Bereich von etwa 50 µm bis etwa 1000 µm, wie bestimmt durch SLS.

8. Beschichtete anorganische Quellmittelpartikel gemäß einem der vorstehenden Ansprüche, wobei das Gewichtsverhältnis zwischen anorganischem Quellmittel und der Sol/Gel-gebildeten Beschichtung in dem Bereich von 15:1 bis 1:2, vorzugsweise 10:1 bis 1:1, liegt.

9. Verfahren zur Herstellung von beschichteten anorganischen Quellmittelpartikeln gemäß einem der vorstehenden Ansprüche, umfassend
(a) Bereitstellen von Partikeln eines anorganischen Quellmittels, das fähig ist, in Kontakt mit Wasser zu quellen,
(b) Aufbringen eines Sols aus Sol/Gel-bildenden Vorläuferstoffen auf die Partikel des anorganischen Quellmittels, um einen Film zu bilden, wobei die Sol/Gel-bildenden Vorläuferstoffe wenigstens eine erste Sol/Gel-bildende Komponente eines ersten Metall(oid)s und eine zweite Sol/Gel-bildende Komponente eines zweiten Metall(oid)s umfassen,
(c) Gelieren des Sols,
(d) Trocknen der beschichteten Partikel auf einen Wassergehalt von 0,5 Gew.-% bis 5 Gew.-% und
(e) Unterwerfen der beschichteten Partikel an eine Wärmebehandlung bei einer Temperatur von 100 °C bis 1000 °C.

10. Verfahren gemäß Anspruch 9, wobei die Temperatur im Verlauf von Schritt (e) von 200 °C bis 500 °C beträgt.

11. Verfahren gemäß Anspruch 9, wobei die erste Sol/Gelbildende Komponente ein Siliciumdioxid-Vorläuferstoff ist und die zweite Sol/Gel-Komponente ausgewählt ist aus einer Sol/Gel-bildenden Verbindung von Aluminium, Bor, Titan, Zirkonium und/oder Zink, vorzugsweise aus Borsäure, Borax, einem Aluminiumsalz oder einem Alkalimetallaluminat.

12. Verfahren gemäß Anspruch 11, umfassend
- Herstellen einer ersten Lösung, die ein wasserlösliches Alkalimetallsilicat umfasst, mit einem pH-Wert von 10 bis 12,
- Herstellen einer zweiten Lösung, die eine Sol/Gelbildende Verbindung von Aluminium, Bor, Titan, Zirkonium und/oder Zink, vorzugsweise Borsäure und/oder ein Aluminiumsalz, umfasst, mit einem pH-Wert von 1 bis 5,
- Kombinieren der ersten Lösung und der zweiten Lösung und Aufbringen der gemischten Lösung auf die anorganischen Quellmittelpartikel.

13. Verwendung der beschichteten anorganischen Quellmittelpartikel gemäß einem der Ansprüche 1 bis 8 als Bestandteil von Baumaterialformulierungen und/oder zur Herstellung von Bauprodukten, insbesondere für Betone, wie z. B. Ortbeton, Fertigbetonteile, vorgegossene Betonteile, Betonwaren, Gussbetonsteine, Betonziegel, In-situ-Beton, Spritzbeton (Shotcrete), Fertigbeton, Spritzbeton (air-placed concrete), Betonreparatursysteme, industriellen Estrichboden, Einkomponenten- und Zweikomponenten-Dichtschlämme, Estrich, Füll- und selbstnivellierende Zusammensetzungen, wie z. B. Fugenfüller oder selbstnivellierender Unterlage, Klebstoffe, wie z. B. Gebäude- oder Bauklebstoffe, Wärmeisolationsverbundstoffsystem-Klebstoffe, Fliesenklebstoffe, Putz, Mörtel, Klebstoffe, Dichtmittel, Beschichtungs- und Anstrichsysteme, insbesondere für Tunnel, Abwasserleitungen, Spritzschutz und Kondensatleitungen, Estrich, Mörtel, wie z. B. Trockenmörtel, ablaufbeständige, fließfähige oder selbstnivellierende Mörtel, Entwässerungsmörtel oder Reparaturmörtel, Vergussmörtel, wie z. B. Fugenmörtel, nichtschrumpfende Mörtel, Windmühlenmörtel, Ankermörtel, EIFS-Mörtel (Exterior Insulation Finishing Systems) oder Quellsprengmittel.

## Revendications

1. Particules d'agent d'expansion inorganique revêtues comprenant un noyau ou une pluralité de noyaux d'un agent d'expansion inorganique qui est capable de gonfler au contact avec l'eau, et un revêtement formé par sol/gel comprenant un oxyde mixte de deux métaux et/ou métalloïdes ou plus.

2. Particules d'agent d'expansion inorganique revêtues selon la revendication 1, l'agent d'expansion inorganique ne représentant pas plus de 90 % en poids du ou des noyaux.

3. Particules d'agent d'expansion inorganique revêtues selon la revendication 1 ou 2, l'agent d'expansion inorganique étant choisi parmi l'oxyde de calcium, l'oxyde de magnésium, l'oxyde de strontium, l'oxyde de baryum, et des oxydes mixtes correspondants, l'hémihydrate de sulfate de calcium, l'anhydrite, le sulfate de sodium, le sulfate de magnésium, des phyllosilicates et des mélanges de deux ou plus de ceux-ci.

4. Particules d'agent d'expansion inorganique revêtues selon la revendication 3, l'agent d'expansion inorganique ne comprenant pas plus de 90 % en poids d'au moins l'un parmi l'oxyde de calcium et l'oxyde de magnésium.

5. Particules d'agent d'expansion inorganique revêtues selon l'une quelconque des revendications précédentes, le revêtement formé par sol/gel comprenant un oxyde mixte de silicium et d'au moins un autre métal et/ou métalloïde choisi parmi l'aluminium, le bore, le titane, le zirconium et le zinc.

6. Particules d'agent d'expansion inorganique revêtues selon la revendication 5, l'oxyde mixte comprenant 0,1 à 15,0 % en poids, préférablement 1,0 à 8,0 % en poids, de l'autre métal et/ou métalloïde, par rapport à la somme de silicium et de métal et/ou de métalloïde calculée sur une base élémentaire.

7. Particules d'agent d'expansion inorganique revêtues selon l'une quelconque des revendications précédentes, possédant une taille de particule d(50) dans la plage d'environ 50 µm à environ 1 000 µm telle que déterminée par SLS.

8. Particules d'agent d'expansion inorganique revêtues selon l'une quelconque des revendications précédentes, le rapport en poids entre l'agent d'expansion inorganique et le revêtement formé par sol/gel étant dans la plage de 15 : 1 à 1 : 2, préférablement 10 : 1 à 1 : 1.

9. Procédé pour la préparation de particules d'agent d'expansion inorganique revêtues selon l'une quelconque des revendications précédentes, comprenant
(a) la mise à disposition de particules d'un agent d'expansion inorganique qui est capable de gonfler au contact avec l'eau,
(b) le dépôt d'un sol à partir de précurseurs de formation de sol/gel sur les particules de l'agent d'expansion inorganique pour former un film, les précurseurs de formation de sol/gel comprenant au moins un premier composant de formation de sol/gel d'un premier métal(loïde) et un deuxième composant de formation de sol/gel d'un deuxième métal(loïde),
(c) la gélification du sol,
(d) le séchage des particules séchées jusqu'à une teneur en eau de 0,5 % à 5 % en poids, et
(e) la soumission des particules revêtues à un traitement thermique à une température de 100 °C à 1 000 °C.

10. Procédé selon la revendication 9, la température au cours de l'étape (e) étant de 200 °C à 500 °C.

11. Procédé selon la revendication 9, le premier composant de formation de sol/gel étant un précurseur de silice et le deuxième composant de formation de sol/gel étant choisi parmi un composé de formation de sol/gel d'aluminium, de bore, de titane, de zirconium et/ou de zinc, préférablement l'acide borique, le borax, un sel d'aluminium ou un aluminate de métal alcalin.

12. Procédé selon la revendication 11, comprenant
- la préparation d'une première solution comprenant un silicate de métal alcalin soluble dans l'eau à un pH allant de 10 à 12,
- la préparation d'une deuxième solution comprenant un composé de formation de sol/gel d'aluminium, de bore, de titane, de zirconium et/ou de zinc, préférablement l'acide borique, le borax et/ou un sel d'aluminium, à un pH allant de 1 à 5,
- la combinaison de la première solution et de la deuxième solution et le dépôt de la solution mixte sur les particules d'agent d'expansion inorganique.

13. Utilisation des particules d'agent d'expansion inorganique revêtues selon l'une quelconque des revendications 1 à 8 en tant que constituant de formulations de matériaux de construction et/ou pour la production de produits de construction, en particulier pour des bétons tels que des bétons sur site, éléments préfabriqués en béton, des éléments précoulés en béton, des produits en béton, des pierres en béton coulé, des briques de béton, du béton *in situ,* du béton projeté (béton projeté), du béton prêt à l'emploi, du béton placé à l'air, des systèmes de réparation de béton, un revêtement de sol en ciment industriel, des boues d'étanchéité à un composant et à deux composants, des chapes, des compositions de remplissage et autonivelantes, telles que des remplissages de joints ou des sous-couches autonivelantes, des adhésifs, tels que des adhésifs du bâtiment ou de la construction, des adhésifs pour système composite d'isolation thermique, des adhésifs pour carrelage, des crépis, des plâtres, des adhésifs, des agents d'étanchéité, des systèmes de revêtement et de peinture, en particulier pour des tunnels, des canalisations pour eaux usées, une protection contre éclaboussement et des lignes de condensat, des chapes, des mortiers, tels que des mortiers secs, des mortiers résistants à l'affaissement, fluides ou autonivelants, des mortiers de drainage, ou des mortiers de réparation, des coulis, tels que des coulis pour joint, des coulis sans retrait, des coulis pour éolienne, des coulis d'ancrage, des coulis SFIE (systèmes de finition d'isolation extérieure) ou des explosifs gonflants.
